# EUROPÄISCHE PATENTSCHRIFT

(11) **EP 1 232 684 B1**
(45) Veröffentlichungstag und Bekanntmachung des Hinweises auf die Patenterteilung: **29.03.2006**
(21) Anmeldenummer: 02002751.2
(22) Anmeldetag: 07.02.2002
(51) Int. Cl.: A01G 17/14, E04H 17/20

(54) **Pfahl aus profilgewalztem Metallblech für den Wein- oder Obstbau**
Profiled prop consisting of laminated sheet metal for cultivating vine or fruits
Piquet profilé en tôle laminée pour la culture de la vigne ou des fruits

(30) Priorität: 07.02.2001 DE 10105830
(43) Veröffentlichungstag der Anmeldung: 21.08.2002
(73) Patentinhaber: Voestalpine Präzisionsprofil GmbH, 50354 Hürth (DE)
(72) Erfinder: Kottirre, Frank, 41542 Dormagen (DE)
(74) Vertreter: Gesthuysen, von Rohr & Eggert

(56) Entgegenhaltungen:
- DE-A- 3 533 963
- FR-A- 2 311 497
- FR-A- 2 611 428
- FR-A- 2 712 141

## Beschreibung

Die Erfindung betrifft einen Pfahl aus profilgewalztem Metallblech für den Wein- oder Obstbau, insbesondere einen Weinbergpfahl, mit einem im wesentlichen U-förmigen Querschnitt, mit einem U-Rücken und mit zwei U-Schenkeln, wobei an den U-Schenkeln je mindestens eine nach außen vorstehende Längsrippe ausgebildet ist, wobei die Längsrippen einen nach innen offenen, im wesentlichen U-förmigen Querschnitt aufweisen und in den Längsrippen je mindestens eine nach außen offene Aufnahmetasche zur Auf nahme eines Drahtes ausgebildet ist und die Aufnahmetasche eine im U-Rücken der Längsrippen ausgebildete Zunge und je ein in den U-Schenkeln der Längsrippen ausgebildetes Aufnahmefenster aufweisen, wobei die beiden Aufnahmefenster durch einen zwischen der mit dem U-Rücken der Längsrippen in einer Ebene liegenden Zunge und dem U-Rücken der Längsrippen gebildeten Schlitz miteinander verbunden sind, so daß ein Draht durch den Schlitz in die Aufnahmetasche hineingelangen bzw. aus der Aufnahmetasche herausgelangen kann.

Derartige Pfähle, die auch als Spalierpfähle, Stützpfähle oder Zeilenpfähle, bzw. wenn sie im Weinbau eingesetzt werden als Weinbergpfähle oder Weinbaupfähle bezeichnet werden, werden seit vielen Jahren verwendet. Die Pfähle werden dabei meist zeilenweise zueinander angeordnet, wobei die Pfähle im wesentlichen senkrecht in den Erdboden hineingedrückt werden. Ursprünglich wurden zur Befestigung der zwischen den einzelnen Pfählen einer Zeile gespannten Drähte überwiegend Holzpfähle verwendet, an denen die Drähte mit Hilfe von Haken oder Krampen befestigt wurden. Daneben wurden wegen der besseren Haltbarkeit teilweise auch Betonpfähle eingesetzt.

Mit der zunehmenden Verbreitung von landwirtschaftlichen Maschinen, insbesondere von sogenannten Vollerntemaschinen, sind die Holz- und Betonpfähle immer weiter zurückgedrängt worden. Die Betonpfähle verursachen zu starke Beschädigungen an den Vollerntemaschinen und sind außerdem zu spröde und damit bruchgefährdet. Bei den Holzpfählen besteht das Problem darin, daß sich bei der maschinellen Ernte die in die Holzpfähle eingeschlagenen Haken und Krampen lösen, was zum einen zu einer Beschädigung der Drahtrahmen führt, zum anderen gelangen die Haken und Krampen zusammen mit den Trauben in die Pressen und Maischepumpen, wo es zu Beschädigungen kommen kann.

Aus diesen Gründen werden seit mehreren Jahren zunehmend aus profilierten bzw. profilgewalzten Metallblechen, insbesondere Stahlblechen, hergestellte Pfähle verwendet. Zunächst sind einfach profilierte Pfähle mit aus dem Blech ausgestanzten und formgebogenen Haken zum Einhängen und Befestigen der Drähte verwendet worden. Diese Pfähle haben jedoch den Nachteil, daß durch die Schlagstäbe der Vollerntemaschinen die Haken regelmäßig beschädigt, insbesondere zusammengedrückt werden und somit die Haken vor dem Umhängen der Drähte wieder von Hand aufgebogen werden müssen.

Aufgrund dieser Nachteile sind diese zunächst ausschließlich verwendeten einfachen Pfähle in vielen Gebieten durch Pfähle verdrängt worden, die innenliegende Haken aufweisen. Diese - eingangs beschriebenen - Pfähle haben einen etwa U-förmigen Querschnitt, wobei an den beiden U-Schenkeln nach außen vorspringende Längsrippen mit ihrerseits etwa U-förmigen Querschnitt ausgebildet sind. In den Längsrippen sind Aufnahmetaschen für die Drähte ausgebildet, wobei die Aufnahmetaschen aus einer im U-Rücken der Längsrippen ausgebildete Zunge - dem innenliegenden Haken - und je einem in den U-Schenkeln der Längsrippen ausgebildeten Aufnahmefenster bestehen. Die beiden Aufnahmefenster sind durch einen zwischen der Zunge und dem U-Rücken gebildeten Schlitz miteinander verbunden, so daß der Draht durch den Schlitz in die Aufnahmetasche hineingelangen bzw. aus der Aufnahmetasche herausgelangen kann. Dadurch, daß die Zunge aus dem U-Rücken der Längsrippe gebildet wird und mit diesem in einer Ebene liegt, besteht nicht mehr die Gefahr, daß die Zunge und damit die Aufnahmetasche durch die Schlagstäbe der Vollerntemaschinen zusammen- bzw. zugedrückt wird. Ein derartiger Weinbergpfahl ist aus der DE 25 60 090 C2 bekannt.

Darüber hinaus besteht bei den bekannten Pfählen das Problem, daß der Draht im Laufe der Zeit aushängt, d. h. aus den am Pfahl ausgebildeten Haken herausrutscht. Das Aushängen der Drähte kann dabei sowohl durch statische als auch durch dynamische Vorgänge hervorgerufen werden. Ein Aushängen der Drähte aufgrund dynamischer Vorgänge kann zum Beispiel durch böigen Wind oder rhythmisch arbeitende landwirtschaftliche Maschinen verursacht werden. Dieses Problem wird dann noch zusätzlich verstärkt, wenn sich der Pfahl in einer Hanglage befindet oder auf einem hügeligen Weinberg, was regelmäßig der Fall ist.

Zur Verhinderung des Aushängens verläuft bei dem aus der DE 25 60 090 C2 bekannten Weinbergpfahl der Schlitz unter einem Winkel von etwa 30° zur Horizontalen und damit auch zur Drahtrichtung, wodurch ein ungewolltes Herausfallen des Drahtes aus der Aufnahmetasche im Normalfall verhindert wird. Wenn sich der Pfahl in einer Hanglage befindet muß dann darauf geachtet werden, daß die Schrägstellung des Schlitzes entgegengesetzt zur Hanglage verläuft, da sich ansonsten die Aushänggefahr für den Draht vergrößert.

Im Laufe der Zeit ist es manchmal notwendig, die Drähte ein erstes Mal anzuheben und die Triebe wachsen zu lassen und dann die Drähte ein zweites Mal etwas höher anzubinden. In diesem Fall müssen die Drähte so angebracht werden, daß die Möglichkeit besteht, sie schnell aus- und einzuhängen, um keine Zeit zu verlieren.

Bei dem aus der DE 25 60 090 C2 bekannten Pfahl ist das gewollte Einhängen oder Umhängen der Drähte - sowohl maschinell als auch von Hand - nur mit großem Aufwand möglich, da der Schlitz zum Einhängen der Drähte unter einem Winkel zur Drahtrichtung verläuft. In diesem Fall muß der Draht abgebogen bzw. abgekröpft werden, um ihn in die Aufnahmetasche einzuhängen. Insbesondere unter der Last der Trauben, d. h. beim Umhängen des Drahtes aus einer Aufnahmetasche in einer ersten Ebene in eine Aufnahmetasche einer zweiten Ebene, ist dafür ein großer Kraftaufwand erforderlich. Außerdem wird der Draht durch die beim Umhängen erforderliche Kröpfung zusätzlich gespannt, so daß es vorkommen kann, daß der Draht an den Kanten des Schlitzes hängenbleibt und dabei sowohl den Schlitz beschädigt, als auch selber beschädigt wird. Um eine Beschädigung zu verhindern ist es daher erforderlich, den Draht vor dem Umhängen von den Zeilenpfählen zu lösen oder jedenfalls die Spannung mit der die Drähte gespannt sind deutlich zu verringern. Beides erfordert jedoch einen erhöhten Zeitaufwand, so daß der Draht bei dem bekannten Pfahl nur mit Mühe umgehängt werden kann.

Befindet sich der Pfahl in einer Hanglage und verläuft die Schrägstellung des Schlitzes entgegengesetzt zur Hanglage, um die Aushänggefahr zu verringern, so führt dies dazu, daß der Draht beim Einhängen oder Umhängen noch stärker abgebogen bzw. abgekröpft werden muß.

Aus der DE 35 33 963 C2 ist ein U-förmiger Pfahl bekannt, der an den Enden der beiden U-Schenkel je eine einwärts gerichtete Rinne aufweist, die nach außen über die U-Schenkel hervorsteht. An den U-Schenkeln sind außenliegenden Haken ausgebildet, wobei neben dem Haken je ein Vorsprung vorgesehen ist, der dazu dient, den im Haken gehaltenen Draht vor ungewolltem Aushängen zu sichern. Der Vorsprung wird dabei dadurch gebildet, daß die einwärts gerichtete Rinne auf Höhe des Hakens flachgedrückt ist. Zum Umhängen des Drahtes ist es jedoch auch hier erforderlich, den Draht bezogen auf seine Längsrichtung stark abzuknicken, was jedenfalls bei unter Spannung stehenden Drähten nur mit großem Kraftaufwand möglich ist. Darüber hinaus ist bei diesem Pfahl ein bezogen auf den Querschnitt breiteres Metallblech als Ausgangsmaterial erforderlich, um die nach außen über die U-Schenkel hervorstehenden Rinne bilden zu können.

Der vorliegenden Erfindung liegt daher die Aufgabe zugrunde, einen eingangs beschriebenen Pfahl aus profilgewalztem Metallblech dahingehend zu verbessern, daß ein Draht möglichst einfach ein- und umgehängt werden kann, aber trotzdem weitestgehend gegen ungewolltes Aushängen gesichert ist. Außerdem soll der Pfahl möglichst einfach hergestellt werden können und so ausgebildet sein, daß eine Beschädigung des eingehängten Drahtes vermieden wird.

Diese Aufgabe ist bei dem eingangs beschriebenen Pfahl zunächst und im wesentlichen dadurch gelöst, daß der Schlitz im wesentlichen senkredit zur Längserstreckung des pfahls und damit parallel zur Längsrichtung des Drahtes verläuft und daß in etwa auf Höhe der Aufnahmetaschen je mindestens ein Vorsprung aus den U-Schenkeln des Pfahls herausgeformt ist, wobei die Unterkante des Vorsprung unterhalb des Schlitzes angeordnet ist und vom Boden der Aufnahmetasche einen Abstand größer als der Durchmesser des zu befestigenden Drahtes hat.

Dadurch, daß der Schlitz im wesentlichen parallel zur Längsrichtung des Drahtes verläuft kann auch ein unter Zugspannung stehender Draht einfach - insbesondere ohne daß eine Abknicken des Drahtes erforderlich ist - in die Aufnahmetasche hineingelegt bzw. aus der Aufnahmetasche herausgenommen werden. Durch den in etwa auf Höhe der Aufnahmetasche aus dem U-Schenkel herausgeformten Vorsprung, dessen Unterkante unterhalb des Schlitzes angeordnet ist, wird ein einmal in die Aufnahmetasche hineingelegter Draht durch den Vorsprung daran gehindert, aufgrund von Schlägen oder Vibrationen ungewollt durch den Schlitz aus der Aufnahmetasche herauszufallen. Da der Abstand der Unterkante des Vorsprungs vom Boden der Aufnahmetasche größer als der Durchmesser des zu befestigenden Drahtes ist, wird der Draht in seiner Normalposition, in der er auf dem Boden der Aufnahmetasche aufliegt, durch den Vorsprung nicht eingeklemmt, so daß der Draht insbesondere in Längsrichtung beweglich ist und somit ein Nachspannen des Drahtes durch den Vorsprung nicht verhindert wird.

Der Pfahl wird üblicherweise aus geeignetem Bandstahl im Walzverfahren kalt oder warm geformt. Zur Erzielung eines ausreichenden Korrosionsschutzes des Pfahls wird in der Regel verzinktes Stahlband verwendet. Der Korrosionsschutz kann durch Stückverzinkung d. h. durch Verzinkung des fertigen Pfahls, weiter erhöht werden. Daneben kann das Bandmaterial oder der einzelne Pfahl beschichtet, insbesondere galvan-beschichtet, galvanverzinkt, sendzimir-verzinkt oder lackiert werden. Auch ist es möglich, den Pfahl aus Edelstahl, aus einer Aluminium-Legierung oder einer anderen korrosionsbeständigen, aber dennoch walzbaren und stanzbaren Metall-Legierung herzustellen.

Gemäß einer bevorzugten Ausgestaltung des erfindungsgemäßen Pfahls weist die Unterkante des Vorsprungs einen Abstand zum jeweiligen U-Schenkel auf, der etwa so groß ist wie der Durchmesser des zu befestigenden Drahtes, vorzugsweise etwas größer ist als der Durchmesser des befestigenden Drahtes. Dadurch wird erreicht, daß der Draht insbesondere dann, wenn er an den U-Schenkeln des Pfahles anliegt von dem Vorsprung vollständig überdeckt wird, so daß der Draht bei einer ungewollten Aufwärtsbewegung gegen die Unterkante des Vorsprungs stößt, wodurch eine Aushängen verhindert wird.

Gemäß einer weiteren bevorzugten Ausgestaltung des Pfahles ist die lichte Weite zwischen der Zunge der Aufnahmetasche und der Unterkante des Vorsprungs etwas kleiner als der Durchmesser des zu befestigenden Drahtes. Dadurch wird ein ungewolltes Aushängen des Drahtes nahezu hundertprozentig verhindert, da der Draht nicht mehr ohne weiteres den Durchtritt zwischen der Zunge und dem Vorsprung passieren kann. Um bei einer derartigen Dimensionierung von Zunge und Vorsprung dennoch ein möglichst einfaches Einhängen und Umhängen eines Drahtes zu ermöglichen, ist der Vorsprung so ausgebildet, daß der Abstand des Rückens des Vorsprungs zum jeweiligen U-Schenkel nach oben hin kleiner wird. Der Rücken verläuft somit schräg zur Längsachse des Pfahls, wobei der Vorsprung im Bereich seiner Unterkante den größten Abstand vom jeweiligen U-Schenkel aufweist. Dadurch ist es möglich, daß ein Draht bereits durch eine sehr geringe Schrägstellung den Durchtritt zwischen der Zunge und dem Vorsprung passieren kann und somit in die Aufnahmetasche hineingelegt bzw. aus der Aufnahmetasche herausgenommen werden kann.

Im einzelnen gibt es nun eine Vielzahl von Möglichkeiten, den erfindungsgemäßen Pfahl auszugestalten und weiterzubilden. Dazu wird verwiesen auf die dem Patentanspruch 1 nachgeordneten Patentansprüche sowie auf die Beschreibung bevorzugter Ausführungsbeispiele, in Verbindung mit der Zeichnung. In der Zeichnung zeigen
- Fig. 1: eine perspektivische Darstellung des oberen Endbereichs eines Weinbergpfahls gemäß einer ersten Ausgestaltung der Erfindung, mit einem Draht,
- Fig. 2: eine Ansicht des Weinbergpfahl gemäß Fig. 1, aus Richtung des Pfeils A,
- Fig. 3: eine Seitenansicht eines Weinbergpfahls und einen Querschnitt durch einen Weinbergpfahl, ähnlich dem in Fig. 1 dargestellten Weinbergpfahl,
- Fig. 4: eine Ansicht des oberen Bereichs eines Weinbergpfahls, ähnlich dem in Fig. 1 dargestellten Weinbergpfahl,
- Fig. 5: eine Seitenansicht eines Weinbergpfahls gemäß einer zweiten Alternative,
- Fig. 6: eine Ansicht des oberen Bereichs eines Weinbergpfahls gemäß der Fig. 5, um 90° gedreht,
- Fig. 7: einen Querschnitt durch einen Weinbergpfahl gemäß der Fig. 5,
- Fig. 8: eine vergrößerte Darstellung eines Teils des Weinbergpfahls gemäß der Fig. 5,
- Fig. 9: eine Seitenansicht eines Weinbergpfahls gemäß einer dritten Alternative,
- Fig. 10: einen Querschnitt durch einen Weinbergpfahl gemäß der Fig. 9 und
- Fig. 11: eine Darstellung eines Metallblechs zwischen zwei Profilwalzen, bei der Herstellung eines Weinbergpfahls.

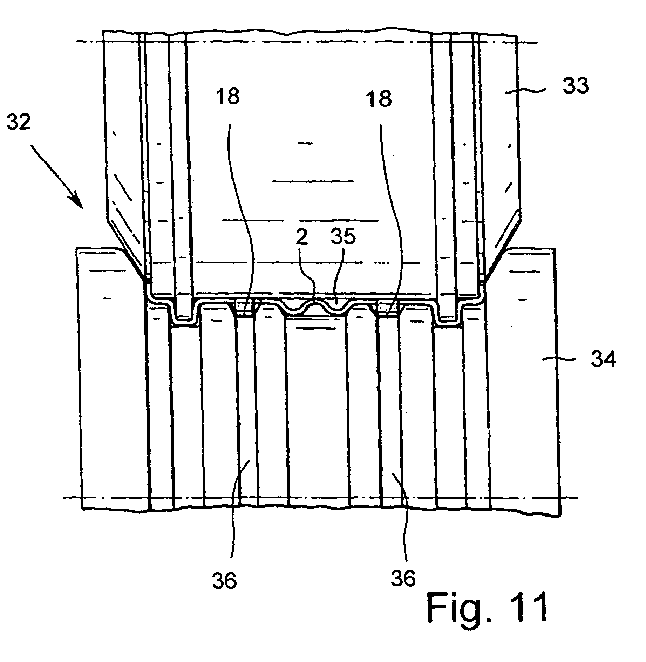

Der in den Figuren dargestellte Weinbergpfahl 1 wird aus einem - in Fig. 11 dargestellten - Metallblech 2 durch Profilwalzen hergestellt. Zur Erreichung eines ausreichenden Korrosionsschutzes wird der Weinbergpfahl 1, der meist aus Stahl besteht, in der Regel verzinkt oder beschichtet, wobei unterschiedliche Verzinkungsverfahren und/oder Beschichtungsverfahren, insbesondere die Stückverzinkung oder Feuerverzinkung, angewandt werden können. Der Weinbergpfahl 1 hat je nach Einsatzgebiet und damit je nach Anbaugebiet üblicherweise eine Länge zwischen 1,40 m bis 3,0 m, wobei das Metallblech 2 üblicherweise eine Dicke von 1,25 mm bis 2,25 mm aufweist. Wird für das Metallblech 2 ein hochfester Stahl verwendet, so kann die Dicke des Metallblechs 2 auch auf ca. 0,9 mm reduziert sein.

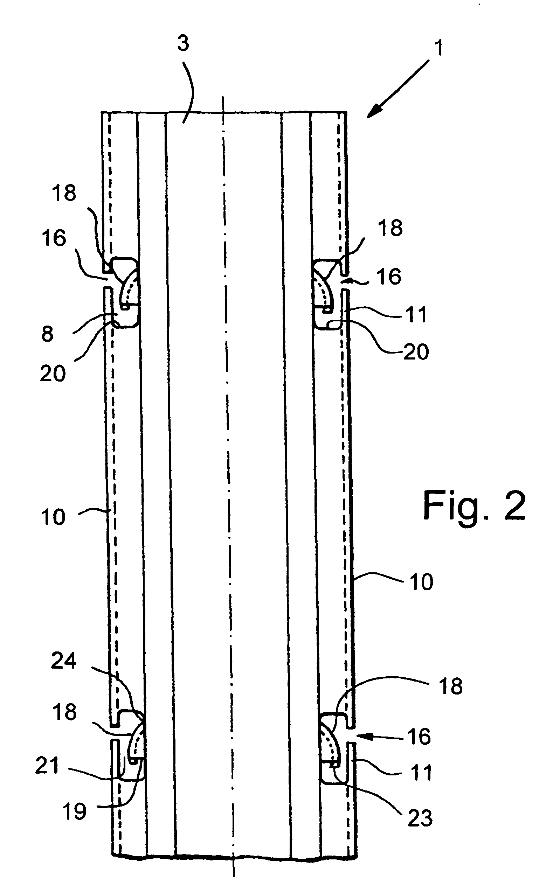

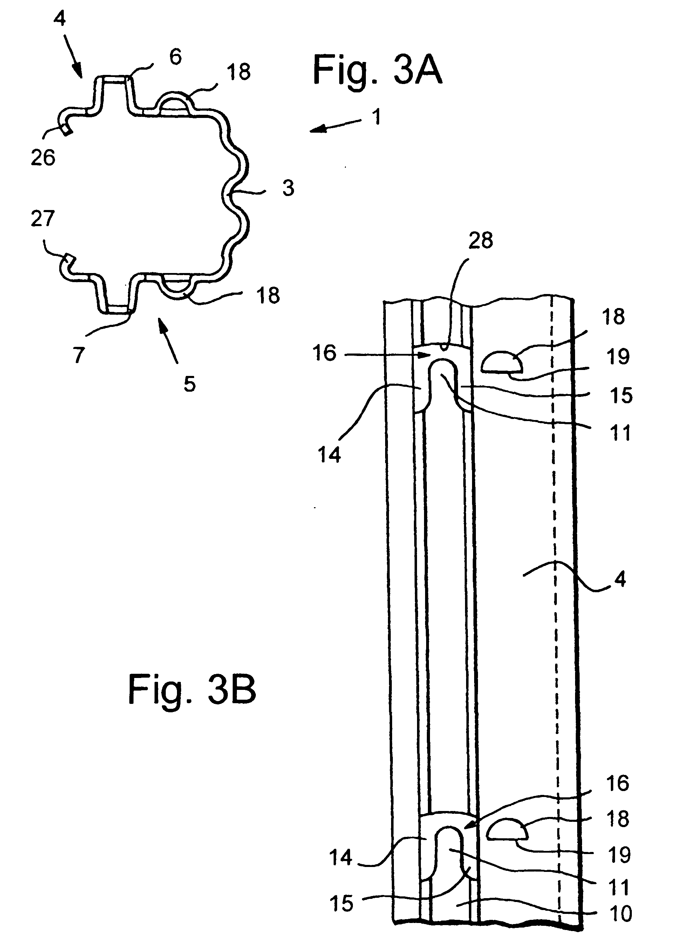

Die Figuren zeigen lediglich den oberen Endbereich des Weinbergpfahls 1, wobei im aufgestellten Zustand des Weinbergpfahls 1 etwa die unteren 60 - 80 cm in den Erdboden eingesteckt sind. Die in den Figuren dargestellten unterschiedlichen Varianten des erfindungsgemäßen Weinbergpfahls 1 weisen jeweils einen im wesentlichen U-förmigen Querschnitt mit einem U-Rücken 3 und mit zwei U-Schenkeln 4, 5 auf. In den U-Schenkeln 4,5 ist je eine nach außen vorstehende Längsrippe 6, 7 ausgebildet, in der über die Länge des Weinbergpfahls 1 im wesentlichen gleichmäßig verteilt mehrere Aufnahmetaschen 8 zur Aufnahme eines Drahtes 9 ausgebildet sind. Die beiden obersten Aufnahmetaschen 8 sind in einem Abstand von wenigen Zentimetern, beispielsweise von 5 cm, vom oberen Rand des Weinbergpfahls 1 angeordnet. Nach unten weist der Weinbergpfahl 1 weitere, - in Fig. 2 und Fig. 3 dargestellte - Aufnahmetaschen 8 auf, die jeweils einen Abstand von beispielsweise 10 cm zueinander haben. Der Weinbergpfahl 1 ist zu seiner Mittelebene symmetrisch ausgebildet, so daß nachfolgend die weitere Ausgestaltung des Weinbergpfahls 1 vorwiegend anhand der vorderen Sichtseite der Fig .1 bzw. einer Seitenansicht gemäß Fig. 3 beschrieben wird.

Die Aufnahmetaschen 8 weisen eine im U-Rücken 10 der Längsrippe 6 bzw. 7 ausgebildete Zunge 11 und je ein in den U-Schenkeln 12, 13 ausgebildetes Aufnahmefenster 14, 15 auf. Die beiden Aufnahmefenster 14, 15 der Aufnahmetasche 8 sind zum einen durch einen zwischen der Zunge 11 und dem U-Rücken 10 gebildeten Schlitz 16 miteinander verbunden, zum anderen so in den U-Schenkeln 12, 13 der Längsrippe 6 bzw. 7 angeordnet, daß die Aufnahmefenster 14, 15 in Längsrichtung 17 des Drahtes 9 zueinander fluchten. Die Aufnahmefenster 14, 15 sind somit sowohl gleich ausgebildet, als auch auf derselben Höhe im Weinbergpfahl 1 angeordnet.

Erfindungsgemäß verläuft der Schlitz 16 im wesentlichen parallel zur Längsrichtung 17 des Drahtes 9, so daß auch ein unter Zugspannung stehender Draht 9 einfach - insbesondere ohne das ein Abknicken des Drahtes 9 erforderlich wäre - in die Aufnahmetasche 8 hineingelegt bzw. aus der Aufnahmetasche 8 herausgenommen werden kann. Der Schlitz 16 weist dabei eine Höhe auf, die größer als der Durchmesser des zu befestigenden Drahtes 9 ist. Da in der Regel Drähte mit einem Durchmesser von 1,2 - 1,6 mm bei Verwendung von Edelstahldrähten und einem Durchmesser von 2,2 - 3,1 mm bei Verwendung von verzinkten Drähten benutzt werden, weist der Schlitz 16 vorzugsweise eine Höhe von mehr als 3 mm auf, so daß beliebige Drähte 9 verwendet werden können.

Zur Sicherung des Drahtes 9 in der Aufnahmetasche 8 gegen ungewolltes Aushängen ist mit seitlichen Abstand zur Aufnahmetasche 8 ein Vorsprung 18 aus den U-Schenkeln 4 bzw. 5 herausgeformt. Wie im einzelnen anhand der verschiedenen Figuren später noch erläutert wird, kann der Vorsprung 18 unterschiedliche geometrische Formen und Abmessungen aufweisen. Wesentlich ist dabei jedoch, daß die Unterkante 19 des Vorsprungs 18 unterhalb des Schlitzes 16 angeordnet ist und vom Boden 20 der Aufnahmetasche 8 einen Abstand hat, der größer als der Durchmesser des zu befestigenden Drahtes 9 ist.

Dadurch, daß die Unterkante 19 des Vorsprungs 18 unterhalb des Schlitzes 16 angeordnet ist, wird ein einmal in die Aufnahmetasche 8 eingelegter Draht 9 durch den Vorsprung 18 daran gehindert, ungewollt durch den Schlitz 16 wieder aus der Aufnahmetasche 8 herauszufallen. Im Normalfall, d. h. wenn an dem Draht 9 einzelne Weinreben befestigt sind, wird der Draht 9 aufgrund seines Eigengewichts und aufgrund des Gewichts der Weinreben auf dem Boden 20 der Aufnahmetasche 8 aufliegen. Sollte der Draht 9 nun jedoch beispielsweise aufgrund von böigem Wind oder durch von einer landwirtschaftlichen Maschine verursachte Schläge die Tendenz haben, sich nach oben zu bewegen, so wird eine solche Bewegung durch die Unterkante 19 des Vorsprungs 18 gestoppt. Der Draht 9 wird also im unteren Bereich der Aufnahmetasche 8 gehalten, so daß er nicht durch den Schlitz 16 aus der Aufnahmetasche 8 herausgelangen kann.

Da die Unterkante 19 des Vorsprungs 18 vom Boden 20 der Aufnahmetasche 8 einen Abstand hat, der größer als der Durchmesser des zu befestigenden Drahtes 9 ist, wird ein auf dem Boden 20 der Aufnahmetasche 8 aufliegender Draht 9 - was der Normallage des Drahtes 9 entspricht - durch den Vorsprung 18 nicht eingeklemmt, so daß insbesondere eine Längsbewegung des Drahtes 9 beim Nachspannen möglich ist.

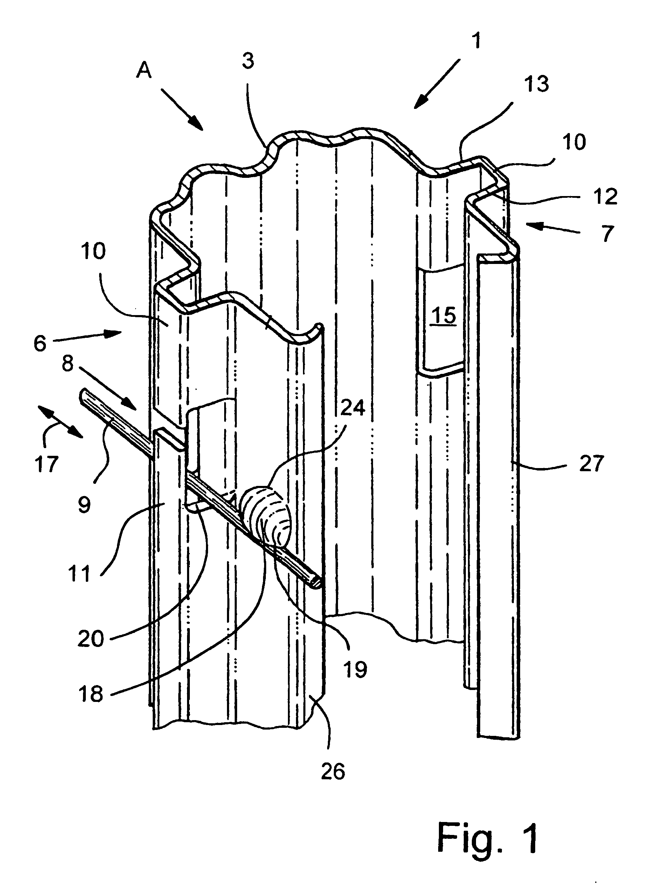

Wie insbesondere aus den Fig. 1, 2 und 4 zu erkennen ist, weist die Unterkante 19 des Vorsprungs eine Tiefe, d. h. einen Abstand zum U-Schenkel 4 auf, der etwas größer ist als der Durchmesser des zu befestigenden Drahtes 9. Dies erhöht die Sicherung des Drahtes 9 in der Aufnahmetasche 8. Bei der Dimensionierung des Vorsprungs 18 relativ zur Aufnahmetasche 8 gibt es nun grundsätzlich zwei unterschiedliche Möglichkeiten.

Wird ein besonders großer Wert auf die möglichst hundertprozentige Verhinderung des ungewollten Aushängens des Drahtes 9 aus der Aufnahmetasche 8 gewollt, so wird der Vorsprung 18 so dimensioniert, daß die lichte Weite 21 zwischen der Zunge 11 der Aufnahmetasche 8 und der Unterkante 19 des Vorsprungs 18 etwas kleiner ist als der Durchmesser des zu befestigenden Drahtes 9. Ist die lichte Weite 21 kleiner als der Durchmesser des zu befestigenden Drahtes 9, so kann der Draht 9 nicht - jedenfalls nicht ohne eine geringfügiges Schrägstellen zu seiner Längsrichtung 17 - den Durchtritt zwischen der Zunge 11 und dem Vorsprung 18 passieren.

Wird dagegen ein besonderer Schwerpunkt auf ein besonders einfaches Ein-/und Umhängen der Drähte 9 gelegt, wobei dennoch der Draht 9 gegen ungewolltes Aushängen weitestgehend gesichert sein soll, so wird der Vorsprung 18 so dimensioniert, daß die lichte Weite 21 zwischen der Zunge 11 der Aufnahmetasche 8 und der Unterkante 19 des Vorsprungs 18 genau so groß ist wie oder etwas größer ist als der Durchmesser des zu befestigenden Drahtes 9. Da in einem solchen Fall der Durchtritt zwischen der Zunge 11 und der Unterkante 19 des Vorsprungs 18 wenigstens so groß ist wie der Durchmesser des Drahtes 9 ist ein müheloses Ein- oder Umhängen des Drahtes 9 möglich. Dennoch ist der Draht 9 weitestgehend gegen ungewolltes Aushängen gesichert, da der Draht 9 nur dann die Unterkante 19 des Vorsprungs 18 passieren könnte, wenn er sich senkrecht entlang der Zunge 11 nach oben bewegen würde. Eine solche - vollständig senkrechte - Bewegung des Drahtes 9 entlang der Zunge 11 ist jedoch in der Praxis eher selten. Auf der anderen Seite kann der Draht 9 jedoch - manuell oder maschinell - dadurch einfach aus der Aufnahmetasche 8 herausgenommen und damit umgehängt werden, daß der Draht 9 entlang der Zunge 11 nach oben bewegt wird.

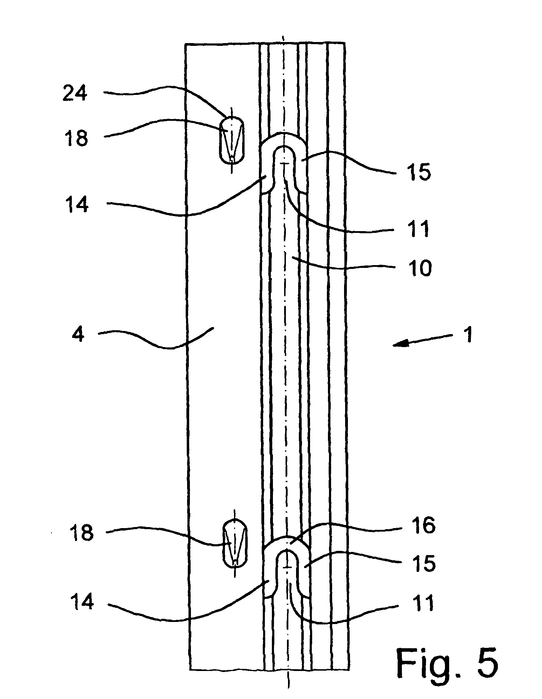

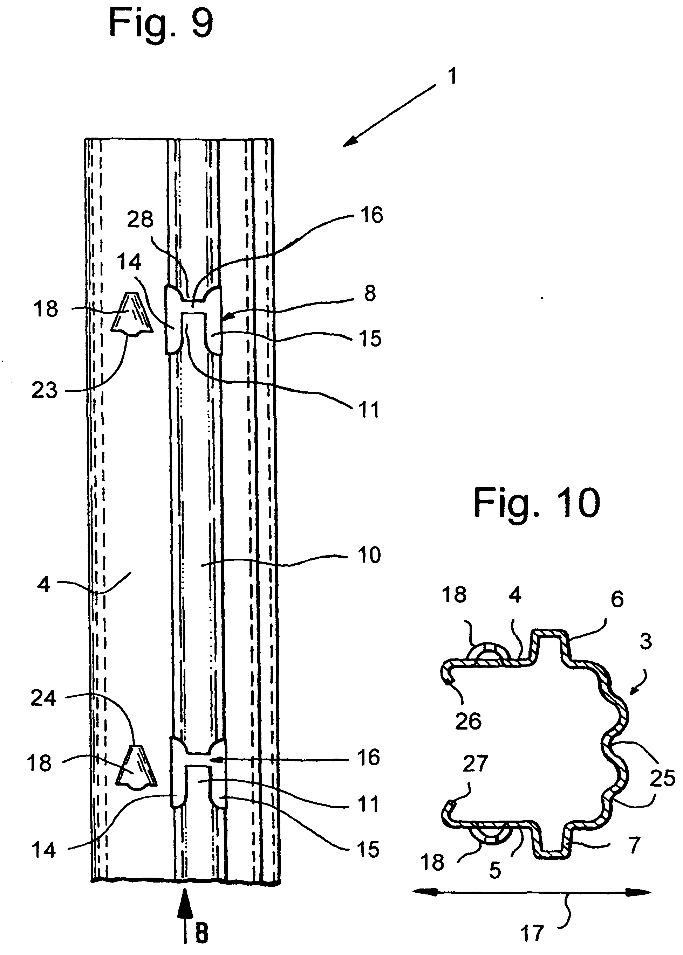

Die in den Figuren dargestellten Weinbergpfähle 1 weisen unterschiedliche Varianten des Vorsprungs 18 auf, wobei der Vorsprung 18 gemäß den Fig. 1 bis 4 etwa die Form einer Viertelkugel hat, der Vorsprung 18 gemäß den Figuren 5 bis 8 noppenförmig ist und der Vorsprung 18 gemäß der Fig. 9 die Form einer Nase aufweist. Allen dargestellten Ausführungsformen des Vorsprungs 18 ist jedoch gemeinsam, daß der Abstand des Rückens 22 des Vorsprungs 18 zum jeweiligen U-Schenkel 4 bzw. 5 nach oben hin kleiner wird. Der Rücken 22 verläuft somit schräg zur Längsachse des Weinbergpfahls 1, wobei der Vorsprung 18 im Bereich seiner Unterkante 19 den größten Abstand von dem U-Schenkel 4 bzw. 5 aufweist. Eine derartige Form des Vorsprungs 18 erleichtert zum einen die Herstellung des Vorsprungs 18, der aus dem flachen Metallblech 2 vor dem Walzen des Weinbergpfahls 1 herausgedrückt wird. Zum anderen erleichtert eine solche Gestaltung des Vorsprungs 18 das Einhängen des Drahtes 9 in die Aufnahmetasche 8. Bei dem in Fig. 9 dargestellten Vorspruch 18 wird darüber hinaus der Rücken 22 auch nach oben hin schmäler, so daß der Vorsprung 18 die bereits erwähnte nasenförmige Kontur aufweist.

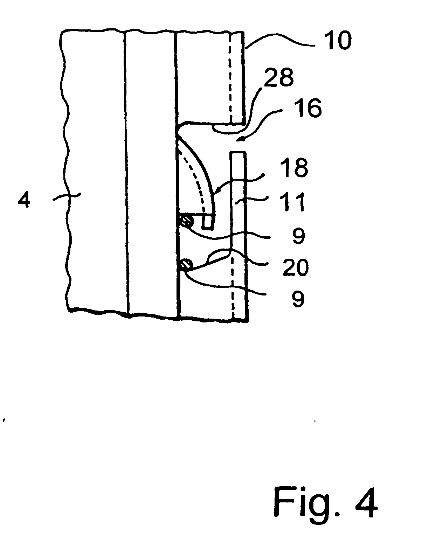

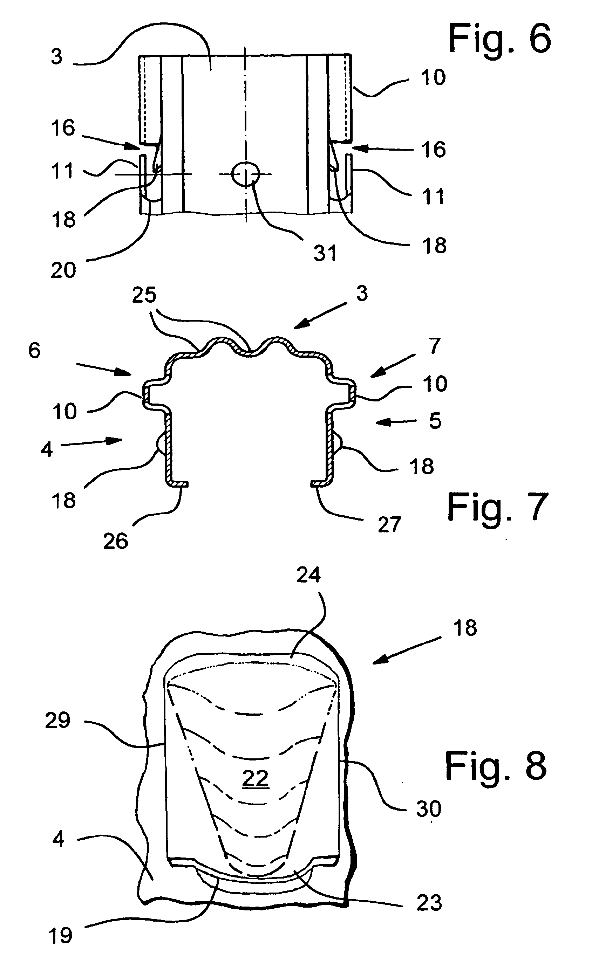

Insbesondere bei der in den Fig. 8 und 9 dargestellten Ausgestaltung des Vorsprungs 18 ist darüber hinaus erkennbar, daß an der Unterkante 19 des Vorsprungs 18 in etwa in der Mitte eine im wesentlichen nach unten gerichtete Zunge 23 ausgebildet ist. Diese Zunge 23 stellte ein zusätzliches Hindernis für den Draht 9 dar, wenn sich dieser ungewollt aus seiner "normalen" Position im unteren Bereich des Aufnahmefensters 8 nach oben in Richtung des Schlitzes 16 bewegt. Aus den Fig. 2 und 4 ist weiter erkennbar, daß durch die Ausbildung der nach unten gerichteten Zunge 23 die Gefahr des ungewollten Aushängens des Drahtes 9 weiter verringert wird, daß möglichst einfache Einhängen des Drahtes 9 in die Aufnahmetasche 8 durch die Zunge 23 jedoch nicht behindert wird.

Bei dem in Fig. 4 dargestellten Ausführungsbeispiel ist der Boden 20 der Aufnahmetasche 8 - in Längsrichtung 17 des Drahtes 9 gesehen - schräg ausgebildet, wobei der tiefste Punkt des Bodens 20 am Übergang der Aufnahmefenster 14, 15 zum U-Schenkel 4 bzw. 5 angeordnet ist. Der tiefste Punkt des Bodens 20 bzw. der Aufnahmetasche 8 stellt somit die stabile Lage für den Draht 9 dar, so daß der Draht 9 dann, wenn er senkrecht nach oben ausgelenkt wird, gegen die Unterkante 19 des Vorsprungs 18 stößt und damit nicht durch den Schlitz 16 aus der Aufnahmetasche 8 hinausgelangen kann. Eine seitliche Bewegung des Drahtes 9 - verursacht beispielsweise durch den Wuchs der Weinreben - in der oberen Lage wird darüber hinaus durch die nach unten gerichtete Zunge 23 des Vorsprungs 18 begrenzt, so daß die Gefahr, daß der Draht 18 durch den Schlitz 16 aus dem Aufnahmefenster 8 herausgelangt weiter verringert wird.

Bei der in Fig. 6 dargestellten Ausführungsform des erfindungsgemäßen Weinbergpfahls 1 weist der Boden 20 der Aufnahmetasche 8 senkrecht zur Längsrichtung 17 des Drahtes 9 eine konkave Form auf, wobei der tiefste Punkt des Bodens 20 näher zum jeweiligen U-Schenkel 4 bzw. 5 hin angeordnet ist. Auch durch eine solche Ausgestaltung des Bodens 20 bzw. der Aufnahmetasche 8 wird gewährleistet, daß der Draht 9 durch eine lediglich senkrechte Bewegung nicht aus der Aufnahmetasche 8 ausgehängt werden kann.

Bei den beiden zuvor in Verbindung mit den Fig. 4 und 6 beschriebenen Ausgestaltungen der Aufnahmetaschen 8 erfolgt das gewollte Aushängen bzw. Umhängen eines Drahtes 9 dadurch, daß der Draht 9 entlang der Innenseite der Zunge 11 nach oben bewegt wird, wobei gegebenenfalls eine geringfügige Schrägstellung des Drahtes 9 erforderlich ist, damit dieser den Durchtritt zwischen der Zunge 11 und dem Vorsprung 18 passieren und durch den Schlitz 16 aus der Aufnahmetasche 8 herausgenommen werden kann.

Bei dem zweiten Ausführungsbeispiel gemäß den Fig. 5 bis 8 ist der obere Rand 24 des Vorsprungs 18 oberhalb des Schlitzes 16 angeordnet. Erfindungsgemäß ist die Unterkante 19 des Vorsprungs 18 unterhalb des Schlitzes 16 angeordnet, wobei hier der Abstand der Unterkante 19 vom unteren Rand des Schlitzes 16 etwas größer ist als der Durchmesser des zu befestigenden Drahtes 9. Bei einer solchen Dimensionierung und Zuordnung von Aufnahmefenster 8 und Vorsprung 18 zueinander ist ein einfaches Ein- und Umhängen eines Drahtes 9 möglich, auch wenn die lichte Weite 21 zwischen der Zunge 11 und der Unterkante 19 des Vorsprungs 18 etwas kleiner ist als der Durchmesser des zu befestigenden Drahtes 9. Bei einer solchen, insbesondere in den Fig. 5 bis 8 dargestellten Ausgestaltung des Weinbergpfahles 1 lassen sich die beiden an sich einander widersprechenden Anforderungen - leichtes Ein- und Umhängen eines Drahtes 9 einerseits und größtmögliche Sicherung des Drahtes 9 gegen ungewolltes Aushängen andererseits - optimal realisieren.

Bei den in den Figuren dargestellten Ausführungsbeispielen des erfindungsgemäßen Weinbergpfahles ist zum einen der U-Rücken 3 wellenförmig ausgebildet, d. h. der U-Rücken 3 weist mehrere Sicken 25 auf, sind zum anderen die Endbereiche der U-Schenkel 4, 5 nach innen abgebogen, so daß sich einwärts gerichtete Rinnen 26, 27 ergeben. Sowohl durch die in dem U-Rücken 3 ausgebildeten Sicken 25 als auch durch die Rinnen 26, 27 wird die Stabilität des Weinbergpfahles 1 erhöht.

Bevorzugt sind die Vorsprünge 18 zwischen den Rinnen 26, 27 und den Längsrippen 6, 7 angeordnet, wie dies in den Fig. 1, 7 und 10 dargestellt ist. Daneben können jedoch auch die Längsrippen 6, 7 und die Vorsprünge 18 ihre Position zueinander vertauschen, so daß die Vorsprünge 18 zwischen den Längsrippen 6, 7 und dem U-Rücken 3 angeordnet sind, wie dies in Fig. 3 dargestellt ist. Bei beiden Varianten wird der Draht 9 großflächig entlang der U-Schenkel 4, 5 geführt.

Insbesondere bei einem Vergleich der Fig. 3b und 9 ist erkennbar, daß die Aufnahmetasche 8 bzw. die Aufnahmefenster 14, 15 unterschiedliche Formen aufweisen können. Die in der in Fig. 9 dargestellte Aufnahmetasche 8 wird durch eine H-förmige Ausstanzung aus dem Metallblech 2 gebildet, so daß der obere Rand 28 der Aufnahmetasche 8 im U- Rücken 10 tiefer verläuft als in den U-Schenkeln 12, 13. Dadurch wird der Draht 9 vor dem Herausfallen gesichert, auch wenn der Draht 9 oben am Aufnahmefenster 14 bzw. 15 anliegt, beispielsweise weil der Weinbergpfahl 1 in einer Senke steht. Dagegen wird die Aufnahmetasche 8 gemäß den Fig. 3b, 4 oder 6 durch eine n-förmige Ausstanzung aus dem Metallblech 2 gebildet, so daß der obere Rand 28 der Aufnahmetasche 8 im U- Rücken 10 und in den U-Schenkeln 12, 13 im wesentlichen die gleiche Höhe aufweist. Ist dabei das Ende der Zunge 11 und der obere Rand 28 der Aufnahmetasche 8 etwas abgerundet, wodurch scharfe Kanten und damit eine Beschädigung des Drahtes 9 verhindert werden, und der Radius des oberen Randes 28 der Aufnahmetasche 8 etwas größer als der Radius des Endes der Zunge 11, so läßt sich der Draht 9 durch eine kurze Handbewegung besonders einfach aus der Aufnahmetasche 8 gezielt und gewollt nach oben herausschleudern.

Bei dem in Fig. 6 dargestellten Ausführungsbeispiel des Weinbergpfahls 1 ist im U-Rücken 3 ein Loch 31 vorgesehen, das von der Oberkante des Weinbergpfahls 1 beispielsweise einen Abstand von 3 bis 5 cm hat und je nach Abmessung des Weinbergpfahls 1 einen Durchmesser von 5 bis 20 mm hat. Dieses Loch 31 kann zum einen zur Aufnahme eines festen Drahtes dienen, wird zum anderen auch dazu benutzt, einen im Erdboden eingesteckten Weinbergpfahls 1 später wieder aus dem Boden herauszuziehen. Schließlich kann das Loch 31 auch dazu dienen, den Weinbergpfahl 1 nach dem Walzen aus einem Tauchbad herauszuziehen, in dem der Weinbergpfahl 1 vergütet oder beschichtet wird.

Abschließend soll anhand der Fig. 11 die Herstellung eines erfindungsgemä-βen Weinbergpfahls 1 kurz erläutert werden. Die Fig. 11 zeigt ein Walzenpaar 32, mit einer Oberwalze 33 und einer Unterwalze 34 und einem zwischen der Oberwalze 33 und der Unterwalze 34 gebildeten Walzenspalt 35. In dem Walzenspalt 35 wird ein Metallblech 2 geführt, das nach dem Durchlaufen durch eine Vielzahl von jeweils unterschiedlich ausgebildeten Walzenpaaren - von denen in Fig. 11 lediglich ein Walzenpaar 32 dargestellt ist - einen Querschnitt gemäß dem in den Fig. 7 oder 10 dargestellten Weinbergpfahl 1 aufweist. Aus dem in Fig. 11 dargestellten Metallblech 2 sind bereits die Vorsprünge 18 herausgedrückt. Dies geschieht zum Erreichen einer definierten Form dadurch, daß die Unterkante 19, die gegebenenfalls eine Zunge 23 aufweist, in das flache Metallblech 2 eingestanzt ist und anschließend der Vorsprung 18 aus dem Metallblech 2 herausgedrückt wird, wobei dann die Unterkante 19 von dem später einen U-Schenkel 4 bzw. 5 bildenden Teil des Metallblech 2 getrennt wird, während der Rücken 22 des Vorsprungs 18 über den oberen Rand 24 und die Seitenränder 29, 30 mit dem Metallblech 2 verbunden bleibt. Dadurch hat der Vorsprung 18 eine ausreichende Stabilität, so daß er weder durch die Schlagstäbe der Vollerntemaschinen noch beim Transport flachgedrückt wird.

Damit die Vorsprünge 18 nun beim Durchlaufen des Metallblechs 2 durch die einzelnen Walzenpaare 32 nicht wieder verformt, insbesondere plattgedrückt werden, sind in der Unterwalze 34 korrespondierend zu der Position der Vorsprünge 18 Ringnuten 36 angeordnet. Hat das Metallblech 2 sämtlich Walzenpaare 32 durchlaufen, wobei einzelne Walzenpaare 32 auch senkrecht zur Transportrichtung des Metallblechs 2 angeordnet sein können, so daß durch diese Walzenpaare insbesondere die Endbereiche des Metallblechs 2 zur Herstellung der Rinnen 26, 27 umgebogen werden können, so wird das fertig profilierte Metallblech 2 entsprechend der gewünschten Länge des Weinbergpfahls 1 abgeschnitten.

Welche der in den Figuren dargestellten Ausführungsform des erfindungsgemäßen Weinbergpfahls 1 jeweils eingesetzt wird, hängt unter anderem von dem jeweiligen Weinbaugebiet und den damit verbundenen Anbaubedingungen ab. Allen Ausführungsformen ist jedoch gemeinsam, daß der Weinbergpfahl 1 einfach herzustellen ist, die durch die Aufnahmetaschen 8 gebildeten innenliegenden Haken sowie die Vorsprünge 18 durch die Schlagstäbe der Maschinen nicht flachgedrückt werden können und der Weinbergpfahl 1 auch beim Transport, bei dem eine Vielzahl von Weinbergpfählen 1 zu Bündeln zusammen gebunden sind, nicht beschädigt wird.

## Patentansprüche

1. Pfahl aus profilgewalztem Metallblech (2) für den Wein- oder Obstbau, insbesondere Weinbergpfahl (1), mit einem im wesentlichen U-förmigen Querschnitt, mit einem U-Rücken (3) und mit zwei U-Schenkeln (4, 5),
wobei an den U-Schenkeln (4, 5) je mindestens eine nach außen vorstehende Längsrippe (6, 7) ausgebildet ist, die Längsrippen (6, 7) einen nach innen offenen, im wesentlichen U-förmigen Querschnitt aufweisen und in den Längsrippen (6,7) je mindestens eine nach außen offene Aufnahmetasche (8) zur Aufnahme eines Drahtes (9) ausgebildet ist und
wobei die Aufnahmetasche (8) eine im U-Rücken (10) der Längsrippen (6, 7) ausgebildete Zunge (11) und je ein in den U-Schenkeln (12, 13) der Längsrippen (6, 7) ausgebildetes Aufnahmefenster (14, 15) aufweisen,
wobei die beiden Aufnahmefenster (14, 15) durch einen zwischen der mit dem U-Rücken (10) der Längrippen in einer Ebene liegenden Zunge (11) und dem U-Rücken (10) der Längrippen gebildeten Schlitz (16) miteinander verbunden sind, so daß ein Draht (9) durch den Schlitz (16) in die Aufnahmetasche (8) hineingelangen bzw. aus der Aufnahmetasche (8) herausgelangen kann,
**dadurch gekennzeichnet,**
**daß** der Schlitz (16) im wesentlichen senkrecht zur Längserstreckung des Pfahls und damit parallel zur Längsrichtung (17) des Drahtes (9) verläuft und
**daß** in etwa auf Höhe der Aufnahmetaschen (8) je mindestens ein Vorsprung (18) aus den U-Schenkeln (4, 5) des Pfahls herausgeformt ist, wobei die Unterkante (19) des Vorsprung (18) unterhalb des Schlitzes (16) angeordnet ist und vom Boden (20) der Aufnahmetasche (8) einen Abstand größer als der Durchmesser des zu befestigenden Drahtes (9) hat

2. Pfahl nach Anspruch 1, **dadurch gekennzeichnet, daß** die Unterkante (19) des Vorsprungs (18) einen Abstand zum jeweiligen U-Schenkel (4, 5) auf weist, der etwa so groß ist wie der Durchmesser des zu befestigenden Drahtes (9), vorzugsweise etwas größer ist als der Durchmesser des zu befestigenden Drahtes (9).

3. Pfahl nach Anspruch 1 oder 2, **dadurch gekennzeichnet, daß** die Zunge (11) einen größeren Abstand als die Unterkante (19) des Vorsprungs (18) zum jeweiligen U-Schenkel (4, 5) aufweist.

4. Pfahl nach Anspruch 3, **dadurch gekennzeichnet, daß** die lichte Weite (21) zwischen der Zunge (11) und der Unterkante (19) des Vorsprungs (18) etwas kleiner ist als der Durchmesser des zu befestigenden Drahtes (9).

5. Pfahl nach Anspruch 3, **dadurch gekennzeichnet, daß** die lichte Weite (21) zwischen der Zunge (11) und der Unterkante (19) des Vorsprungs (18) genauso groß ist wie oder etwas größer ist als der Durchmesser des zu befestigenden Drahtes (9).

6. Pfahl nach einem der Ansprüche 1 bis 5, **dadurch gekennzeichnet, daß** der Rücken (22) des Vorsprungs (18) nach oben hin schmäler und/oder der Abstand des Rückens (22) zum jeweiligen U-Schenkel (4, 5) nach oben hin kleiner wird.

7. Pfahl nach einem der Ansprüche 1 bis 6, **dadurch gekennzeichnet, daß** an der Unterkante (19) des Vorsprungs (18) in etwa in der Mitte eine im wesentlichen nach unten gerichtete Zunge (23) ausgebildet ist.

8. Pfahl nach einem der Ansprüche 1 bis 7, **dadurch gekennzeichnet, daß** der Boden (20) der Aufnahmetasche (8) senkrecht zur Längsrichtung (17) des Drahtes (9) eine konkave Form aufweist, wobei der tiefste Punkt des Bodens (20) näher zum jeweiligen U-Schenkeln (4, 5) hin angeordnet ist.

9. Pfahl nach einem der Ansprüche 1 bis 8, **dadurch gekennzeichnet, daß** der obere Rand (24) des Vorsprungs (18) oberhalb des Schlitzes (16) angeordnet ist.

10. Pfahl nach Anspruch 9, **dadurch gekennzeichnet, daß** der Abstand der Unterkante (19) des Vorsprungs (18) vom unteren Rand des Schlitzes (16) etwas größer als der Durchmesser des zu befestigenden Drahtes (9) ist.

11. Pfahl nach einem der Ansprüche 1 bis 10, **dadurch gekennzeichnet, daß** die U-Schenkeln (4, 5) in ihrem Endbereich nach innen abgebogen sind, so daß sich einwärts gerichtete Rinnen (26, 27) ergeben und daß die Vorsprünge (18) zwischen den Rinnen (26, 27) und den Längsrippen (6, 7) angeordnet sind.

12. Pfahl nach einem der Ansprüche 1 bis 10, **dadurch gekennzeichnet, daß** der Boden (20) der Aufnahmetasche (8) zum jeweiligen U-Schenkeln (4, 5) hin abschüssig ist.

13. Pfahl nach einem der Ansprüche 1 bis 12 mit einer Mehrzahl von Aufnahmetaschen (8) und einer Mehrzahl von Vorsprüngen (18), **dadurch gekennzeichnet, daß** sich die in den beiden Längsrippen (6, 7) ausgebildeten Aufnahmetaschen (8) und die aus den U-Schenkeln (4, 5) herausgeformten Vorsprünge (18) jeweils einander paarweise gegenüberliegen, wobei die Aufnahmetaschen (8) und die Vorsprünge (18) in Längsrichtung des Pfahls vorzugsweise jeweils gleichmäßig voneinander beabstandet sind.

14. Verfahren zur Herstellung eines Pfahls, nach einem der Ansprüche 1 bis 13 insbesondere eines Weinbergpfahls, mit einem im wesentlichen U-förmigen Querschnitt, mit einem U-Rücken und mit zwei U-Schenkeln, wobei an den U-Schenkeln je mindestens eine nach außen vorstehende Längsrippe ausgebildet ist, wobei die Längsrippen einen nach innen offenen, im wesentlichen U-förmigen Querschnitt aufweisen und in den Längsrippen je mindestens eine nach außen offene Aufnahmetasche zur Aufnahme eines Drahtes ausgebildet ist und die Aufnahmetasche eine im U-Rücken der Längsrippen ausgebildete Zunge und je ein in den U-Schenkeln der Längsrippen ausgebildetes Aufhahmefenster aufweisen, wobei die beiden Aufnahmefenster durch einen zwischen der mit dem U-Rücken der Längsrippen in einer Ebene liegenden Zunge und dem U-Rücken der Längsrippen gebildeten, im wesentlichen senkrecht zur Längserstreckung des Pfahls verlaufenden Schlitz miteinander verbunden sind, aus einem Metallblech, wobei
in etwa auf Höhe der Aufnahmetaschen je mindestens ein Vorsprung im Bereich der U-Schenkeln des Pfahbs aus dem flachen Metallblech herausgeprägt wird, und wobei die Unterkante des Vorsprung unterhalb des Schlitzes angeordnet ist und vom Boden der Aufnahmetasche einen Abstand größer als der Durchmesser des zu befestigenden Drahtes hat.

15. Verfahren nach Anspruch 14, **dadurch gekennzeichnet, daß** zunächst die Unterkante des Vorsprungs in das flache Metallblech eingestanzt wird und anschließend der Vorsprung aus dem Metallblech herausgedrückt wird.

## Claims

1. Post consisting of profile-rolled metal sheet (2) for cultivating vine or fruits, in particular a vineyard post (I), having a substantially U-shaped cross section, with a U-back (3) and with two U-legs (4, 5),
at least one outwardly protruding longitudinal rib (6, 7) being formed on each of the U-legs (4, 5), the longitudinal ribs (6, 7) having an inwardly open, substantially U-shaped cross section, and at least one outwardly open receiving pocket (8) for receiving a wire (9) being formed in each of the longitudinal ribs (6, 7), and
the receiving pocket (8) having a tongue (11) formed in the U-back (10) of the longitudinal ribs (6, 7) and a receiving window (14, 15) formed in each of the U-legs (12, 13) of the longitudinal ribs (6, 7),
the two receiving windows (14, 15) being interconnected by means of a slot (16) formed between the tongue (11), situated in a plane with the U-back (10) of the longitudinal ribs, and the U back (10) of the longitudinal ribs, so that a wire (9) can enter the receiving pocket (8) or exit the receiving pocket (8) through the slot (16),
**characterized in**
**that** the slot (16) runs substantially perpendicularly to the longitudinal extent of the post and therefore parallel to the longitudinal direction (17) of the wire (9), and
**that** at least one projection (18) is formed out of the U-legs (4, 5) of the post at approximately the level of each of the receiving pockets (8), the lower edge (19) of the projection (18) being arranged below the slot (16) and having a distance from the bottom (20) of the receiving pocket (8) which is greater than the diameter of the wire (9) to be fastened.

2. Post according to claim 1, **characterized in that** the lower edge (19) of the projection (18) has a distance from the respective U-leg (4, 5) which is approximately as great as the diameter of the wire (9) to be fastened, preferably somewhat greater than the diameter of the wire (9) to be fastened.

3. Post according to claim 1 or 2, **characterized in that** the tongue (11) has a greater distance from the respective U-leg (4, 5) than the lower edge (19) of the projection (18).

4. Post according to claim 3, **characterized in that** the clear width (21) between the tongue (11) and the lower edge (19) of the projection (18) is somewhat smaller than the diameter of the wire (9) to be fastened.

5. Post according to claim 3, **characterized in that** the clear width (21) between the tongue (11) and the lower edge (19) of the projection (18) is exactly the same size as or somewhat greater than the diameter of the wire (9) to be fastened.

6. Post according to one of claims 1 to 5, **characterized in that** the back (22) of the projection (18) becomes narrower towards the top and/or the distance of the back (22) from the respective U-leg (4, 5) becomes smaller towards the top.

7. Post according to one of claims 1 to 6, **characterized in that** a substantially downwardly directed tongue (23) is formed approximately in the centre of the lower edge (19) of the projection (18).

8. Post according to one of claims 1 to 7, **characterized in that** the bottom (20) of the receiving pocket (8) has a concave shape perpendicularly to the longitudinal direction (17) of the wire (9), the lowest point of the bottom (20) being arranged closer towards the respective U-legs (4, 5).

9. Post according to one of claims 1 to 8, **characterized in that** the upper edge (24) of the projection (18) is arranged above the slot (16).

10. Post according to claim 9, **characterized in that** the distance of the lower edge (19) of the projection (18) from the lower edge of the slot (16) is somewhat greater than the diameter of the wire (9) to be fastened.

11. Post according to one of claims 1 to 10, **characterized in that** the U-legs (4, 5) are bent inwardly in their end region, resulting in inwardly directed channels (26, 27), and that the projections (18) are arranged between the channels (26, 27) and the longitudinal ribs (6, 7).

12. Post according to one of claims 1 to 10, **characterized in that** the bottom (20) of the receiving pocket (8) is inclined towards the respective U-legs (4, 5).

13. Post according to one of claims 1 to 12 having a plurality of receiving pockets (8) and a plurality of projections (18), **characterized in that** the receiving pockets (8) formed in the two longitudinal ribs (6, 7) and the projections (18) formed out of the U-legs (4, 5) are in each case situated opposite one another in pairs, the receiving pockets (8) and the projections (18) preferably being uniformly spaced apart in each case in the longitudinal direction of the post.

14. Process for the production from a metal sheet of a post according to one of claims 1 to 13, in particular a vineyard post, having a substantially U-shaped cross section, with a U-back and with two U-legs, at least one outwardly protruding longitudinal rib being formed on each of the U-legs, the longitudinal ribs having an inwardly open, substantially U-shaped cross section, and at least one outwardly open receiving pocket for receiving a wire being formed in each of the longitudinal ribs, and the receiving pocket having a tongue formed in the U back of the longitudinal ribs and a receiving window formed in each of the U-legs of the longitudinal ribs, the two receiving windows being interconnected by means of a slot running substantially perpendicularly to the longitudinal extent of the post and formed between the tongue, situated in a plane with the U-back of the longitudinal ribs, and the U-back of the longitudinal ribs,
in which process at least one projection is stamped out of the flat metal sheet in the region of the U-legs of the post at approximately the level of each of the receiving pockets, and in which process the lower edge of the projection is arranged below the slot and has a distance from the bottom of the receiving pocket which is greater than the diameter of the wire to be fastened.

15. Process according to claim 14, **characterized in that** first the lower edge of the projection is punched into the flat metal sheet and then the projection is pressed out of the metal sheet.

## Revendications

1. Piquet profilé en tôle métallique laminée (2) pour la culture de la vigne ou des fruits, notamment piquet de vigne (1), ayant une section transversale essentiellement en forme de U avec une âme de U (3) et deux branches de U (4, 5),
à chaque fois au moins une nervure longitudinale (6, 7) saillant vers l'extérieur étant réalisée sur les branches du U (4, 5), les nervures longitudinales (6, 7) présentant une section transversale essentiellement en forme de U ouverte vers l'intérieur et à chaque fois au moins une cavité de réception (8) ouverte vers l'extérieur étant réalisée dans les nervures longitudinales (6, 7) pour recevoir un fil (9) et
les cavités de réception (8) présentant une langue (11) réalisée dans l'âme du U (10) des nervures longitudinales (6, 7) et à chaque fois une fenêtre de réception (14, 15) réalisée dans les branches du U (12, 13) des nervures longitudinales (6, 7),
les deux fenêtres de réception (14, 15) étant connectées l'une à l'autre par une fente (16) formée entre la langue (11) se trouvant dans un plan avec l'âme du U (10) des nervures longitudinales et l'âme du U des nervures longitudinales, de sorte qu'un fil (9) puisse entrer à travers la fente (16) dans la cavité de réception (8) ou ressortir de la cavité de réception (8),
**caractérisé en ce que**
la fente (16) s'étend essentiellement perpendiculairement à l'étendue longitudinale du piquet et donc parallèlement à la direction longitudinale (17) du fil (9) et
**en ce qu'**approximativement à la hauteur des cavités de réception (8) à chaque fois au moins une saillie (18) est formée hors des branches du U (4, 5) du piquet, l'arête inférieure (19) de la saillie (18) étant disposé en dessous de la fente (16) et ayant, par rapport au fond (20) de la cavité de réception (8), une plus grande distance que le diamètre du fil (9) à fixer.

2. Piquet selon la revendication 1, **caractérisé en ce que** l'arête inférieure (19) de la saillie (18) présente une distance à la branche de U respective (4, 5) qui est approximativement aussi grande que le diamètre du fil (9) à fixer, de préférence qui est un peu plus grande que le diamètre du fil (9) à fixer.

3. Piquet selon la revendication 1 ou 2, **caractérisé en ce que** la langue (11) présente une plus grande distance que l'arête inférieure (19) de la saillie (18) à la branche de U respective (4, 5).

4. Piquet selon la revendication 3, **caractérisé en ce que** la distance intérieure (21) entre la langue (11) et l'arête inférieure (19) de la saillie (18) est un peu plus petite que le diamètre du fil (9) à fixer.

5. Piquet selon la revendication 3, **caractérisé en ce que** la distance intérieure (21) entre la langue (11) et l'arête inférieure (19) de la saillie (18) est exactement aussi grande ou un peu plus grande que le diamètre du fil (9) à fixer.

6. Piquet selon l'une quelconque des revendications 1 à 5, **caractérisé en ce que** le dos (22) de la saillie (18) devient plus mince vers le haut et/ou la distance du dos (22) à la branche respective du U (4, 5) devient plus petite vers le haut

7. Piquet selon l'une quelconque des revendications 1 à 6, **caractérisé en ce qu'**une langue (23) orientée essentiellement vers le bas est réalisée sur l'arête inférieure (19) de la saillie (18) approximativement au milieu.

8. Piquet selon l'une quelconque des revendications 1 à 7, **caractérisé en ce que** le fond (20) de la cavité de réception (8) présente, perpendiculairement à la direction longitudinale (17) du fil (9), une forme concave, le point le plus profond du fond (20) étant disposé plus près de la branche respective du U (4, 5).

9. Piquet selon l'une quelconque des revendications 1 à 8, **caractérisé en ce que** le bord supérieur (24) de la saillie (18) est disposé au-dessus de la fente (16).

10. Piquet selon la revendication 9, **caractérisé en ce que** la distance de l'arête inférieure (19) de la saillie (18) du bord inférieur de la fente (16) est un peu plus grande que le diamètre du fil (9) à fixer.

11. Piquet selon l'une quelconque des revendications 1 à 10, **caractérisé en ce que** les branches du U (4, 5) sont recourbées vers l'intérieur dans leur région d'extrémité, de sorte qu'il en résulte des rigoles (26, 27) orientées vers l'intérieur et que les saillies (18) soient disposées entre les rigoles (26, 27) et les nervures longitudinales (6, 7).

12. Piquet selon l'une quelconque des revendications 1 à 10, **caractérisé en ce que** le fond (20) de la cavité de réception (8) est en pente vers les branches respectives du U (4, 5).

13. Piquet selon l'une quelconque des revendications 1 à 12, comprenant une pluralité de cavités de réception (8) et une pluralité de saillies (18), **caractérisé en ce que** les cavités de réception (8) réalisées dans les deux nervures longitudinales (6, 7) et les saillies (18) formées hors des branches du U (4, 5) sont à chaque fois opposées par paires, les cavités de réception (8) et les saillies (18) étant espacées dans la direction longitudinale du piquet de préférence à chaque fois régulièrement les unes des autres.

14. Procédé de fabrication d'un piquet selon l'une quelconque des revendications 1 à 13, notamment d'un piquet de vigne, ayant une section transversale essentiellement en forme de U, avec une âme de U et avec deux branches de U, à chaque fois au moins une nervure longitudinale saillant vers l'extérieur étant réalisée sur les branches du U, le nervures longitudinales présentant une section transversale essentiellement en forme de U ouverte vers l'intérieur et dans les nervures longitudinales au moins une cavité de réception ouverte vers l'extérieure étant réalisée pour recevoir un fil et les cavités de réception présentant une langue réalisée dans l'âme du U des nervures longitudinales et à chaque fois une fenêtre de réception réalisée dans les branches du U des nervures longitudinales, les deux fenêtres de réception étant connectées l'une à l'autre par une fente formée entre la langue se trouvant dans un plan avec l'âme du U des nervures longitudinales et l'âme du U des nervures longitudinales, s'étendant essentiellement perpendiculairement à l'étendue longitudinale du piquet, en tôle métallique,
à chaque fois au moins une saillie étant estampée approximativement à la hauteur des cavités de réception dans la région des branches du U du piquet dans la tôle métallique plate, et l'arête inférieure de la saillie étant disposée en dessous de la fente et ayant, par rapport au fond de la cavité de réception, une plus grande distance que le diamètre du fil à fixer.

15. Procédé selon la revendication 14, **caractérisé en ce que** l'arête inférieure de la saillie est d'abord estampée dans la tôle métallique et ensuite la saillie est pressée hors de la tôle métallique.
